# EUROPEAN PATENT APPLICATION

(11) **EP 1 336 535 A1**
(43) Date of publication of application: **20.08.2003**
(21) Application number: 02388013.1
(22) Date of filing: 13.02.2002
(51) Int. Cl.: B60R 11/02

(54) **A holder with ball and socket connection**

(71) Applicant: TELEFONAKTIEBOLAGET L M ERICSSON (publ), 126 25 Stockholm (SE)
(72) Inventor: Angelhag, Anders, 227 38 Lund (SE)
(74) Representative: Boesen, Johnny Peder

(57) **Abstract**

A holder (1) for an object comprising a base part (2) and a holder part (3). The base part (2) and the holder part (3) are interconnected by a ball-and-socket connection comprising a first ball-and-socket part (8) provided at the base part, and a second ball-and-socket part (11) complementary with the first ball-and-socket part and provided at the holder part. At least one fastening strip (5) with means at a distal end (21) adapted for engagement with a surface for securing the holder (1) to the surface is also provided. The fastening strip (5) is provided with friction means for being frictionally engaged with the holder. The fastening strip (5) extends through the ball-and-socket parts (8,11), and tightening of the fastening strip causes the holder (1) to be attached to the surface and to force the ball-and-socket connection into intimate contact.

## Description

### Technical field

The invention relates to a holder for an object, said holder comprising:
- a base part,
- a holder part,
   - said base part and said holder part being interconnected by a ball-and-socket connection comprising
      - a first ball-and-socket part provided at said base part,
      - a second ball-and-socket part complementary with said first ball-and-socket part and provided at said holder part,
- at least one fastening strip having means at a distal end adapted for engagement with a surface for securing said holder to said surface, said fastening strip further being provided with friction means for being frictionally engaged with said holder.

### Related prior art

US-A-5 979 724 discloses a holder of this type intended to hold a personal device, such as a mobile telephone. The holder is attachable to a vehicle grill vent in a vehicle dashboard and due to its structure it is not limited to any specific vehicle, but may be attached to any vehicle dashboard provided with a venting grill. It is attachable without tools to most automobiles by use of two fastening strips. The distal end of each fastening strip is provided with a hook that hooks around a rib in the venting grill, and the other end extends through an opening provided in the base part and is in frictional engagement therewith. By tightening the fastening strips while hooked around ribs of the venting gill, the base part is held against the dashboard immediately surrounding the venting grill. This structure of the holder allows it to adapt to various sizes and shapes of the venting grill while maintaining a firm connection thereto.

The base part of this known holder is provided with a ball of a ball-and-socket connection whereas the actual holder for the personal device is provided with a socket that fits firmly around the ball of the base part. The socket is provided with an external thread, and a lock ring is provided for securing the ball-and-socket connection by tightening the socket around the ball. The ball-and-socket connection makes it possible to angle the actual holder in relation to the base part, so that the personal device can be easily read by the user.

### Object of the invention

The prior art holder consists of a number of elements that must be interconnected when mounting the holder onto a venting grill. Each element of the holder fulfils one function only, i.e. the fastening strips hold the base part to the venting grill, the lock ring keeps the ball and socket in intimate contact, etc.

It is an object of the present invention to provide a holder of the type mentioned in the opening paragraph that comprises fewer parts than the prior art holder and that simplifies the mounting thereof.

### Summary of the invention

The object of the invention is achieved by arranging the holder mentioned in the opening paragraph in such a way that the fastening strip extends through said ball-and-socket parts, and that tightening of the fastening strip causes the holder to be attached to said surface and to force the ball-and-socket connection into intimate contact.

In this manner the fastening strip has a double function, i.e. securing the holder to a surface and forcing the two ball-and-socket parts into intimate contact. These two functions are obtained at the same time when the fastening strip is tightened. Thereby the number of parts is reduced compared to the prior art holder.

In a first preferred embodiment of a holder according to the invention an opening is provided in said first and second ball-and-socket parts, respectively, and a locking element extends through said openings, said locking element being frictionally engaged with the fastening strip. Preferably, the locking element is provided with a central opening through which the fastening strip extends. By providing a separate locking element for the fastening strip it is possible to turn the ball-and-socket parts in relation to each other without moving the engagement point of the fastening strip

The locking element is preferably arranged such that it initially interconnects the base part and the holder part. Thereby, the manufacturer of the holder can assemble the base part and the holder part such that mounting on a surface is facilitated for the user.

In a preferred embodiment the openings provided in the first and second ball-and-socket parts are oblong and extend in essentially perpendicular directions and the locking element is slidably arranged in said openings. In this way it is ensured in a simple manner that the two ball-and-socket parts are mutually movable in all directions while still held together by the locking element.

In a second embodiment the fastening strip extends through a first opening provided in said first ball-and-socket part and is in engagement with a second opening provided in said second ball-and-socket part. The first opening is preferably oblong in order to allow the ball-and-socket connection to be angled. This embodiment still allows the ball-and-socket connection to be angled in one direction by means of even fewer parts than the first preferred embodiment.

The means at the distal end of the fastening strip adapted for engagement with a surface for securing the holder thereto is preferably a hook that is integral with the fastening strip. Thereby the distal end of the fastening strip can be hooked onto any suitable means, such as a rib of a venting grill or the like in a vehicle.

Preferably the fastening strip is provided with ratchet teeth, and the opening, with which it is engaged, is provided with a ratchet that engages at least one of said ratchet teeth. This type of engagement makes the tightening of the fastening strip very simple since it only requires a pulling force applied to the fastening strip while withholding the holder. Furthermore, the ratchet teeth and the ratchet are easily integrated in the fastening strip and the holder, especially if these parts are manufactured from a plastics material.

For facilitating dismounting of the holder the ratchet may be provided with a releasing pin for releasing the engagement between the ratchet and the ratchet teeth.

A groove for withholding a part of the fastening strip may be provided in the holder part, such that the proximal end to which the tightening force has been applied can be bent away so as not to prevent the electronic device from being fixed to the holder.

In a preferred embodiment the base part is provided with three legs adapted for abutting on the surface where the holder is to be mounted, and at least one leg may be extendable from the base part. By using three legs a stable abutment on the surface is ensured, and by making at least one of the legs extendable the holder may be adjusted to span over any size of a venting grill.

The holder is preferably adapted for holding an electronic device which may be of any type such as an electronic communications device, a personal digital assistant (PDA), a navigation device, a display, etc. In a preferred embodiment the holder is adapted for holding a mobile radio station, such as a mobile telephone.

It shall be emphasised that the term "comprise/comprising" when used in this specification is taken to specify the presence of stated features, integers, steps or components but does not preclude the presence or addition of one or more other features, integers, steps components or groups thereof.

### Description of the drawings

The invention will be described in detail in the following with reference to the drawings in which
Fig. 1 shows a first preferred embodiment of a holder according to the invention;
Fig. 2 shows a cross-section through the first embodiment of holder according to the invention;
Fig. 3 shows a cross-section through a second embodiment of a holder according to the invention;
Fig. 4 shows a cross-section through a third embodiment of a holder according to the invention; and
Fig. 5 shows an alternative embodiment of a fastening strip.

### Detailed description of an embodiment of the invention

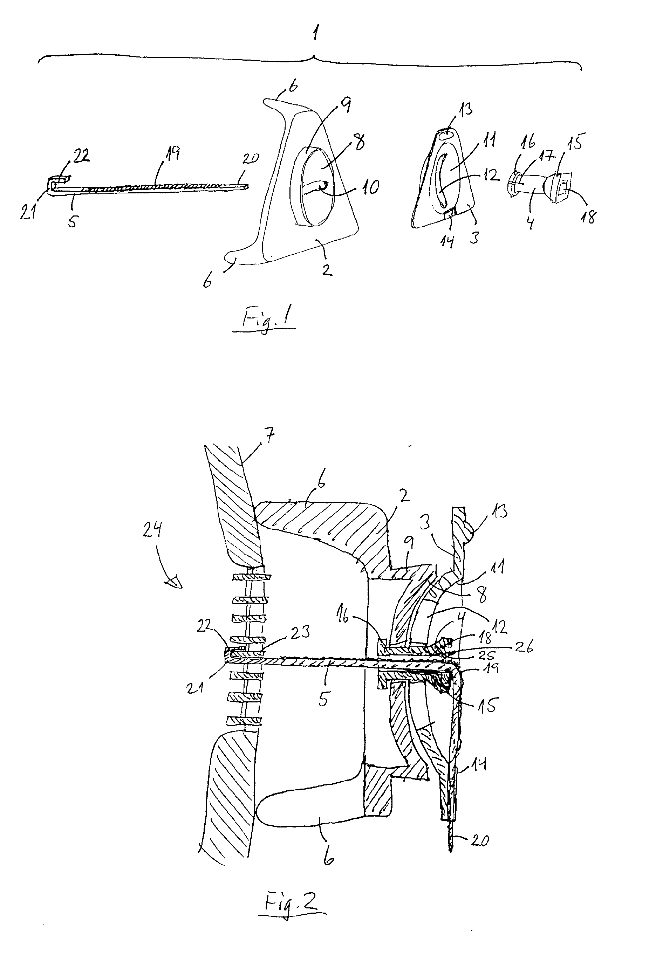

Figs 1 and 2 show a first preferred embodiment of a holder 1 according to the invention. Fig. 1 shows the holder 1 in a disassembled state, whereas Fig. 2 shows a cross-section of the holder 1 in an assembled state and mounted in a vehicle.

The holder comprises four elements: a base part 2, a holder part 3, a locking element 4 and a fastening strip 5.

The base part 2 is provided with three legs 6 (only two are visible) that rest upon the surface 7 when the holder 1 has been mounted. The base part further comprises a first ball-and-socket part 8 shaped as a concave recess provided in a forwardly protruding cylindrical skirt 9.

The first ball-and-socket part 8 is provided with an oblong opening 10 that, in the shown embodiment, extends in a horizontal direction.

The holder part 3 is provided with a second ball-and-socket part 11 that is complementary with the first ball-and-socket part 8 provided on the base part 1. This second ball-and-socket part 11 is also shaped as a concave recess, the rear side of which being complementary with the concave shape of the first ball-and-socket part 8. The second ball-and-socket part 11 is provided with an oblong opening 12 that, in the shown embodiment, extends in a vertical direction. The holder part 3 is further provided with a protrusion 13 that - together with the overall shape of the holder part 3 - is adapted to retain an object, such as an electronic communications device or a supplementary holder therefor. Finally, the holder part 3 is provided with a groove 14 adapted to give room for and possibly withhold a part of the fastening strip 5 when the holder 1 has been mounted.

The locking element 4 has the shape of a bushing that is adapted to interconnect with the base part 2 and the holder part 3 by a snap-fit. To this end the locking element 4 is provided with a head 15 at one end, which head 15 has a cross-section that exceeds the width of the oblong opening 12 in the holder part 3. At the opposite second end the locking element 4 is provided with an outwardly extending bead 16 whose overall cross-section exceeds the width of the oblong opening 10 provided in the base part 2. This second end of the locking element 4 is provided with a slit 17 that allows a certain squeezing of the locking bead 16 in order for it to enter the oblong opening 10 in the base part 2. The locking element 4 is provided with a through-going central opening 18 that is adapted to receive the fastening strip 5.

The fastening strip 5 is shaped as an elongate element that is provided with ratchet teeth 19 at least over a part of it. In order to facilitate insertion of the fastening strip 5 in the central opening 18 of the locking element 4, the first proximal end 20 is preferably not provided with ratchet teeth 18. The second distal end 21 is provided with a hook 22 adapted to hook onto a rib 23 of a venting grill 24 or the like when mounting the holder 1 onto a surface 7, such as a dashboard in a vehicle.

In the following the mounting process of the holder 1 is described.

Initially the base part 2 and the holder part 3 are assembled by means of the locking element 4 that is inserted through the oblong opening 12 in the holder part 3 and is snap-fitted into the oblong opening 10 in the base part 2. This step is preferably performed by the manufacturer of the holder 1, but it may also be performed by the end-user of the holder 1. It should be noted that the two oblong openings 10 and 12 that are preferably perpendicular to each other and the complementary concave shape of the first and second ball-and-socket parts 8,11 entail that the holder part 3 can be displaced in any direction whereby the holder part 3 may be pivoted into any desired angle in relation to the base part 2. The snap-fitting by the locking element 4 does not cause the base part 2 and the holder part 3 to be brought into intimate contact, but simply to hold them together still allowing angulation of the holder part 3 in relation to the base part 2.

The first proximal end 20 of the fastening strip 5 is now inserted into the central opening 18 of the locking element 4 and is displaced forwards until the ratchet teeth 19 engage a ratchet 25 provided in the central opening 18 of the locking element 4 (see Fig. 2), whereby the fastening strip 5 is retained in the locking element 4. The holder 1 is then positioned on the surface 7 where it is to be mounted and the hook 22 provided on the second distal end 21 of the fastening strip 5 is manipulated to hook a rib 23 of a venting grill 24 or the like as shown in Fig. 2. The holder 1 is now moved towards the venting grill 24, while exerting a pulling force at the proximal end 20 of the fastening strip 5, thereby causing the holder 1 to slide along the fastening strip 5.

When the fastening strip 5 is nearly fully tightened it must be ensured that the holder part 3 is angled correctly in relation to the base part 1, since the final tightening of the fastening strip 5 will bring these two parts into intimate contact. When the right angulation is ensured, the fastening strip 5 is finally tightened. During this final tightening the middle part of the base part 2 may be caused to elastically flex towards the venting grill 24 which ensures that sufficient tension exists in the fastening strip 5 when the holder 1 has been mounted. The proximal end 20 of the fastening strip is then bent downwards and is positioned in the groove 14 provided in the holder part 3 as shown in Fig. 2.

In the shown embodiment the ratchet 25 in the locking element 4 is provided with a releasing pin 26. If it is desired to release the ratchet 25 from the ratchet teeth 19 on the fastening strip 5, e.g. for dismounting the holder 1, the releasing pin 26 is forced upwards. Then the holder 1 can be removed from the fastening strip 5.

Alternatively, the holder 1 may be released from the mounting position abutting on the surface 7 by simply cutting the fastening strip 5 between the legs 6 of the base part 2.

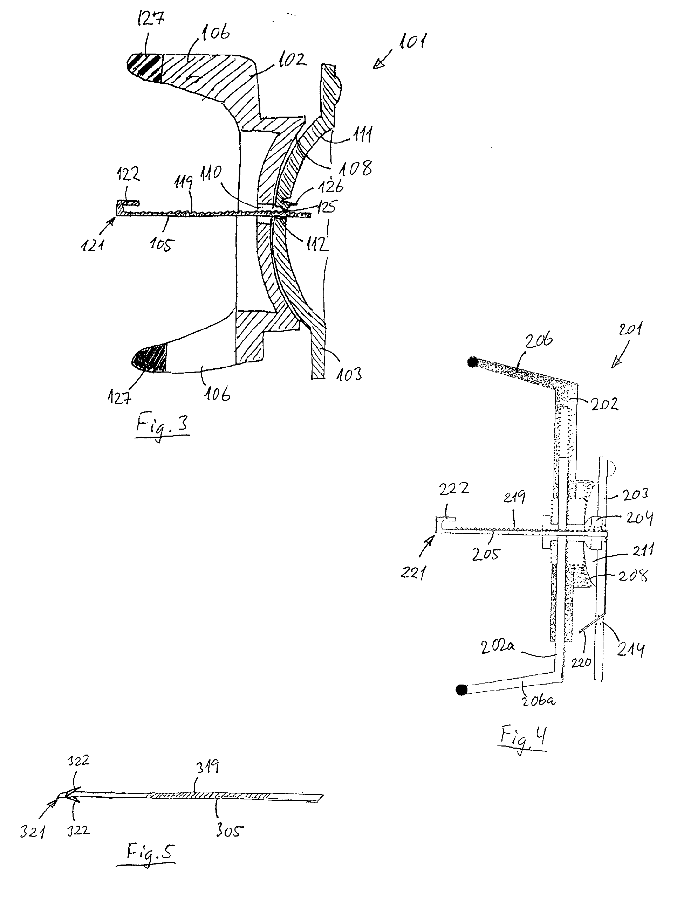

Fig. 3 shows a cross-section through a second embodiment of a holder 101 according to the invention. The holder 101 comprises a base part 102, a holder part 103 and a fastening strip 105.

The base part 102 is very similar to the base part 2 shown in Figs 1 and 2; the only differences being that the oblong opening 110 is narrower than the oblong opening 10 and that the legs 106 are provided with rubber feet 127. The function of these details will be described later.

The holder part 103 is functionally quite different from the holder part 3 shown in Figs 1 and 2. The overall shape of the holder parts 3 and 103 is, however, identical in order to be able to hold a similar electronic device. The holder part 103 has an opening 112 provided in the concave ball-and-socket part 108. The opening 112 is provided with a ratchet 125 that is engageable with ratchet teeth 119 provided on fastening strip 105. The ratchet 125 is provided with a releasing pin 126 for releasing the engagement between the ratchet 125 and the fastening strip 105 if the holder 101 is to be dismounted.

The fastening strip 105 is initially identical to the fastening strip 5 shown in Figs 1 and 2. However, when the holder 101 has been mounted, the proximal end of the fastening strip 105 is cut away as shown in Fig. 3. Therefore, the holder part 103 is not provided with a groove for receiving the proximal end of the fastening strip 105.

The base part 102 and the holder part 103 are not initially held together, but are interconnected when the fastening strip 105 is inserted through the oblong opening 110 in the base part 102 and becomes engaged with the ratchet 125 in the holder part 103 during mounting of the holder 101.

Mounting of the holder 101 against a surface is performed in the same manner as described with reference to the holder 1 shown in Figs 1 and 2. The rubber feet 127 provided on the legs 106 ensure that the holder is prevented from sliding on the surface, and due to compression thereof they also contribute with an elastic force that ensures that the fastening strip 105 is kept tightened during mounting and use of the holder 101. The rubber feet 127 also prevent the holder 1 from damaging the surface on which the holder 1 abuts.

The holder part 103 may be angled in the vertical plane only, since the holder part is not provided with an oblong vertical opening as it is the case with the holder 1 shown in Figs 1 and 2. The flexibility of this holder 101 is thus less than the flexibility of the holder 1 shown in Figs 1 and 2.

Fig. 4 shows a cross-section through a third embodiment of a holder 201 according to the invention. Despite the fact that the overall design of the holder 201 differs from the design of the holder 1 shown in Figs 1 and 2, the holder 201 is technically very similar thereto and comprises a base part 202, a holder part 203, a locking element 204 and a fastening strip 205. The interconnection between these parts 202,203,204,205 corresponds to the interconnection between the same parts 2,3,4,5 in the holder 1 shown in Figs 1 and 2 and will not be described in detail.

However, the structure of the holder 201 differs from the structure of the holder 1 in that the base part 202 is provided with an extendable portion 202a that allows one or two legs 206a to be extended from the base part 202. Thereby it is possible to vary the distance between the leg 206 and the leg(s) 206a in order to adapt the holder 201 to a specific mounting place. This makes the holder 201 suitable for use in any vehicle provided with a venting grill irrespective of the size of the venting grill. The fixation of the extendable leg(s) 206a is preferably achieved by means of a ratchet mechanism.

Another difference is that an opening 214 is provided in the holder part 203, which opening is adapted to receive the proximal end 220 of the fastening strip 205 after mounting of the holder 201.

Finally, Fig. 5 shows an alternative embodiment of the fastening strip. The fastening strip 305 differs from the fastening strips 1,105,205 in that it is provided with two hooks 322 in the form of barbs at the distal end 321 thereof. By arranging the fastening strip 305 in this manner the strip 305 and thereby a holder used with the strip may be attached to any surface provided with a crevice through which the strip can penetrate. The hooks 322 in the form of barbs automatically engage the rear side of such a surface.

The parts of the holder is preferably made from a plastics material that allows flexibility to parts where that is required, such as the fastening strip and preferably also the base part. In order to ensure a stable angulation of the holder part in relation to the base part, the surfaces of the ball-and-socket connections may be provided with a rough pattern that "locks" the two surfaces in relation to each other when the fastening strip is tightened. Alternatively, the surfaces could be provided with a high-friction material or one surface could be provided with a sharp edge that cuts into the other surface.

In another modification of the holder according to the invention at least one of the openings provided in the first and second ball-and-socket parts may be provided as a circular opening.

The fastening strip may be provided with a contraction that causes the fastening strip to break when the optimal pull-force is applied to the fastening strip. Thereby it can be ensured that the right tension by the fastening strip is achieved.

The strip may also have another cross-section than the one shown in Figs 1-5, e.g. a circular cross-section, whereby the resistance against torsion is increased.

Other modifications are possible within the general concept of the invention.

## Claims

1. A holder (1;101,201) for an object, said holder comprising:
- a base part (2;102;202),
- a holder part (3;103;203),
- said base part (2;102;202) and said holder part (3;103;203) being interconnected by a ball-and-socket connection comprising
- a first ball-and-socket part (8;108;208) provided at said base part,
- a second ball-and-socket part (11;111;211) complementary with said first ball-and-socket part and provided at said holder part,
- at least one fastening strip (5;105;205;305) having means at a distal end (21;121;221;321) adapted for engagement with a surface (7) for securing said holder (1;101;201) to said surface, said fastening strip (5;105;205;305) further being provided with friction means for being frictionally engaged with said holder,
**characterised in that** the fastening strip (5;105;205;305) extends through said ball-and-socket parts (8,11;108,111;208,211), and that tightening of the fastening strip causes the holder (1;101;201) to be attached to said surface (7) and to force the ball-and-socket connection into intimate contact.

2. A holder according to claim 1, **characterised in that** an opening (10,12) is provided in said first and second ball-and-socket parts (8,11), respectively, and that a locking element (4) extends through said openings, said locking element being frictionally engaged with the fastening strip (5).

3. A holder according to claim 2, **characterised in that** the locking element (4) is provided with a central opening (18) through which the fastening strip (5) extends.

4. A holder according to claim 3, **characterised in that** the locking element (4) initially interconnects the base part (2) and the holder part (3).

5. A holder according to any one of claims 2-4, **characterised in that** said openings (10,12) provided in the first and second ball-and-socket parts (8,11) are oblong and extend in essentially perpendicular directions, and that the locking element (4) is slidably arranged in said openings (10, 12).

6. A holder according to claim 1, **characterised in that** the fastening strip (105) extends through a first opening (110) provided in said first ball-and-socket part (108) and is in engagement with a second opening (112) provided in said second ball-and-socket part (111).

7. A holder according to claim 6, **characterised in that** said first opening (110) is oblong in order to allow the ball-and-socket connection to be angled.

8. A holder according to any one of claims 1-7, **characterised in that** the fastening strip (5;105;205;305) is provided with at least one hook (22;122;222;322) at the distal end (21;121;221;321).

9. A holder according to any one of claims 1-8, **characterised in that** the fastening strip (5;105;205;305) is provided with ratchet teeth (19;119;219;319), and that the opening with which it is engaged is provided with a ratchet (25;125) that engages at least one of said ratchet teeth.

10. A holder according to claim 9, **characterised in that** the ratchet (25;125) is provided with a releasing pin (26;126) for releasing the engagement between the ratchet and the ratchet teeth.

11. A holder according to any one of claims 1-10, **characterised in that** a groove (14) for withholding a part of the fastening strip (5) is provided in the holder part.

12. A holder according to any one of claims 1-11, **characterised in that** the base part (2;102;202) is provided with three legs (6;106;206,206a) adapted for abutting on the surface (7) where the holder (1;101;201) is to be mounted.

13. A holder according to claim 12, **characterised in that** at least one leg (106a) is extendable from the base part (102).

14. A holder according to any one of claims 1-13, **characterised in that** the holder (1) is adapted for holding an electronic device.

15. A holder according to claim 14, **characterised in that** the electronic device is an electronic communications device.

16. A holder according to claim 15, **characterised in that** the electronic communications device is a mobile radio station, such as a mobile telephone.
